(19) Europäisches Patentamt
European Patent Office
Office européen des brevets

(11) **EP 0 875 741 B1**

(12) **EUROPÄISCHE PATENTSCHRIFT**

(45) Veröffentlichungstag und Bekanntmachung des Hinweises auf die Patenterteilung:
**20.08.2008   Patentblatt 2008/34**

(51) Int Cl.:
***G01F 23/296*** (2006.01)

(21) Anmeldenummer: **97107154.3**

(22) Anmeldetag: **30.04.1997**

(54) **Anordnung zur Feststellung und/oder Überwachung eines vorbestimmten Füllstands in einem Behälter**

Device for determining/monitoring of a predefined liquid level in a container

Dispositif pour la détermination et/ou la surveillance d'un niveau prédéterminé dans un réservoir

(84) Benannte Vertragsstaaten:
**DE FR GB IT**

(43) Veröffentlichungstag der Anmeldung:
**04.11.1998   Patentblatt 1998/45**

(73) Patentinhaber: **Endress + Hauser GmbH + Co. KG**
**79689 Maulburg (DE)**

(72) Erfinder:
• **Getman, Igor, Prof.**
**79540 Lörrach (DE)**

• **Lopatin, Sergej, Dr.**
**79539 Lörrach (DE)**

(56) Entgegenhaltungen:
**DE-A- 4 201 360      DE-A- 4 419 617**
**DE-C- 3 931 453      DE-C- 4 402 234**
**DE-C- 4 439 879**

• **PATENT ABSTRACTS OF JAPAN vol. 012, no. 205 (P-716), 14.Juni 1988 & JP 63 008582 A (MATSUSHITA ELECTRIC IND CO LTD), 14.Januar 1988,**

## Beschreibung

Die Erfindung betrifft eine Anordnung zur Feststellung und/oder Überwachung eines vorbestimmten Füllstandes in einem Behälter, die ein auf der Höhe des vorbestimmten Füllstandes angebrachtes mechanisches Schwingungsgebilde aufweist, das durch einen elektromechanschen Wandler zu Schwingungen anreg wird. Die Schwingungen des mechanischen Schwingungsgebildes werden aufgenommen werden und in elektrische Signale umwandelt. Es wird ein Empfangssignal erzeugt, das angibt, ob das mechanische Schwingungsgebilde von einem Füllgut bedeckt ist oder nicht.

Derartige Füllstandsgrenzschalter werden in vielen Industriezweigen, insb. in der Chemie und in der Lebensmittelindustrie eingesetzt. Sie dienen zur Grenzstandsdetektion und werden z.B. als Überfüllsicherung oder als Pumpenleerlaufschutz verwendet.

In der DE-A 44 19 617 ist eine Anordnung zur Feststellung und/oder Überwachung eines vorbestimmten Füllstandes in einem Behälter beschrieben. Diese umfaßt:

- ein auf der Höhe des vorbestimmten Füllstandes angebrachtes mechanisches Schwingungsgebilde,
- piezoelektrische Elemente,

   -- von denen mindestens eines ein Sender ist, an den im Betrieb über eine Sendesignalleitung ein elektrisches Sendesignal angelegt ist und der das Schwingungsgebilde zu mechanische Schwingungen anregt, -
   -- von denen eines ein erster Empfänger und eines ein zweiter Empfänger ist,

      --- wobei der erste und der zweite Empfänger die mechanischen Schwingungen des Schwingungsgebildes aufnehmen und in elektrische Signale umwandeln,
      --- wobei der erste und der zweite Empfänger jeweils zwei Elektroden aufweisen, von denen eine erste Elektrode auf einer Fläche angeordnet ist, die den Empfänger in Richtung von dessen Polarisation begrenzt und von denen eine zweite Elektrode auf einer Fläche angeordnet ist, die den Empfänger in einer zu dessen Polarisation entgegengesetzten Richtung begrenzt,
      --- wobei das elektrische Signal des ersten Empfängers im Betrieb über eine erste Signalleitung abgegriffen wird,
      --- wobei das elektrische Signal des zweiten Empfängers im Betrieb über eine zweite Signalleitung abgegriffen wird, und

- eine Schaltung, die aus den beiden elektrischen Signalen ein Empfangssignal erzeugt.

Bei der beschriebenen Anordnung ist jedem Empfänger ein Empfangskanal zugeordnet über den die Signale einer weiteren Verarbeitung zugänglich sind. Die Auswertung erfolgt, indem abwechselnd die Signale des einen oder des anderen Kanals verwendet werden.

In der Auswerteeinheit, wird die Frequenz des Empfangssignals bestimmt, mit einer Referenzfrequenz verglichen und ein Ausgangssignal erzeugt, das angibt, daß das mechanische Schwingungsgebilde von einem Füllgut bedeckt ist, wenn die Frequenz einen Wert aufweist der kleiner als die Referenzfrequenz ist, und daß es nicht bedeckt ist, wenn der Wert größer ist.

Es ist ein Regelkreis vorgesehen, der eine zwischen dem elektrischen Sendesignal und dem elektrischen Signal bestehende Phasendifferenz auf einen bestimmten konstanten Wert regelt, bei dem das Schwingungsgebilde Schwingungen mit einer Resonanzfrequenz ausführt.

Der Regelkreis wird z.B. dadurch gebildet, daß jeweils das aktuell verwendete Signal verstärkt und über einen Phasenschieber auf das Sendesignal zurück gekoppelt wird.

Bisher war es nicht möglich derartige Anordnungen auch für Messungen in hochviskosen Medien oder in wasserhaltigen oder zähen Schäumen einzusetzen, da bei diesen Anwendungen eine zuverlässige Anregung des mechanischen Schwingungsgebildes zu Schwingungen bei der Resonanzfrequenz nicht gewährleistet ist.

Erste Untersuchungen, die zu der nachfolgend beschriebenen Erfindung geführt haben, haben gezeigt, daß die Ursache hierfür darin besteht, daß es sich bei der beschriebenen Anordnung um ein komplexes Schwingungssystem handelt, das sich aus dem mechanischen Schwingungsgebilde, dem elektromechanischen Wandler und dem Regelkreis zusammensetzt. Die einzelnen Komponenten sind nicht vollständig elektrisch und mechanisch voneinander getrennt. Es treten sowohl elektrische als auch mechanische Kopplungen auf.

Der feste Wert der Phasendifferenz entspricht der Resonanz des Systems wenn das Schwingungsgebilde in Gasen oder in Flüssigkeiten schwingt. Reduziert sich die Schwingungsgüte der Anordnung jedoch aus irgendeinem Grund, so hat dies zur Folge, daß der feste Wert der Phasendifferenz nicht mehr existiert. Es gibt ab einer bestimmten Reduktion der Schwingungsgüte keine Frequenz bei der das Signal eine von null verschiedene Amplitude und die Phasendifferenz den festen Wert aufweist. Diese Phasendifferenz kann somit durch den Regelkreis nicht eingestellt werden. Es tritt folglich eine Fehlfunktion auf.

Eine Reduktion der Schwingungsgüte tritt z.B. dann auf, wenn die Bewegung des mechanischen Schwingungsgebildes gedämpft wird, z.B. indem es in ein viskoses Medium oder in flüssigkeitshaltigen oder zähen Schaum eingetaucht ist. Weiterhin wird die Schwingungsgüte reduziert durch Energieverluste innerhalb der Anordnung, z.B. bedingt durch Materialermüdungen oder durch Asymmetrien, z.B. aufgrund asymmetrischer Ansatzbildung, die zu asymmetrischen Rückstellkräften führen. Prinzipiell führt jede Art des Energieverlustes, sei es an ein Füllgut abgegebene Schwingungsenergie oder über eine Befestigung der Anordnung an den Behälter abgegebene Energie, zu einer Reduktion der Schwingungsgüte.

In der DE 39 31 453 C1 wird eine Vorrichtung zur Feststellung und/oder Überwachung eines vorbestimmten Füllstandes in einem Behälter beschrieben, bei welcher zwei Schwingstäbe an einer Membran befestigt sind. Die Vorrichtung verfügt über einen Erregungs- und Empfangswandler, in welchem piezoelektrische Elemente in einem Stapel angeordnet sind. Der Piezostapel wird dabei von einer Spannschraube, die mit der Membran fest verbunden ist, durchdrungen und ist zwischen der Membran und einer Sechskant-Mutter eingespannt. Insbesondere gibt es nur einen Empfangswandler, welcher mit einem Verstärker bzw. einer Einrichtung zur Auslösung von Anzeige- und/oder Schaltvorgänge verbunden ist.

Es ist eine Aufgabe der Erfindung, eine Anordnung zur Feststellung und/oder Überwachung eines vorbestimmten Füllstands in einem Behälter anzugeben, bei der das Empfangssignal möglichst dem gewünschten Meßsignal entspricht und bei dem Phase und Amplitude des Empfangssignals über die Frequenz möglichst den gleichen Verlauf zeigen wie Phase und Amplitude des eigentlichen Meßsignals.

Eine weitere Aufgabe der Erfindung, besteht darin, eine derartige Anordnung anzugeben, bei der zwischen dem Sendesignal und dem Empfangssignal bei der Resonanzfrequenz des mechanischen Schwingungsgebildes eine feste Phasendifferenz besteht, die unabhängig Schwingungsgüte der Anordnung ist.

Diese Aufgaben werden gemäß einer ersten Variante der Erfindung gelöst durch Anordnung zur Feststellung und/oder Überwachung eines vorbestimmten Füllstandes in einem Behälter, welche Anordnung umfaßt:

-   ein auf der Höhe des vorbestimmten Füllstandes angebrachtes mechanisches Schwingungsgebilde,
-   in einem Stapel angeordnete piezoelektrische Elemente,

   -- von denen mindestens eines ein Sender ist, an den im Betrieb über eine Sendesignalleitung ein elektrisches Sendesignal angelegt ist und der das Schwingungsgebilde zu mechanische Schwingungen anregt,
   -- von denen eines ein erster Empfänger und eines ein zweiter Empfänger ist,
   --- wobei der erste und der zweite Empfänger die mechanischen Schwingungen des Schwingungsgebildes aufnehmen und in elektrische Signale umwandeln,
   --- wobei der erste und der zweite Empfänger jeweils zwei Elektroden aufweisen, von denen eine erste Elektrode auf einer Fläche angeordnet ist, die den Empfänger in Richtung von dessen Polarisation begrenzt und von denen eine zweite Elektrode auf einer Fläche angeordnet ist, die den Empfänger in einer zu dessen Polarisation entgegengesetzten Richtung begrenzt,
   --- wobei das elektrische Signal des ersten Empfängers über eine erste Signalleitung abgegriffen wird, die mit der zweiten Elektrode des ersten Empfängers verbunden ist, und
   --- wobei das elektrische Signal des zweiten Empfängers über eine zweite Signalleitung abgegriffen wird, die mit der ersten Elektrode des zweiten Empfängers verbunden ist,

-   eine elektrische Impedanz über die die zweite Signalleitung mit der Sendesignalleitung verbunden ist, und
-   eine Schaltung, die aus den beiden elektrischen Signalen ein Empfangssignal erzeugt, das gleich der Differenz der beiden elektrischen Signale ist, und
-   eine Auswerteeinheit, welche die Frequenz des Empfangssignals bestimmt und mit einer Referenzfrequenz vergleicht.

Gemäß einer zweiten Variante werden diese Aufgaben gelöst durch eine Anordnung zur Feststellung und/oder Überwachung eines vorbestimmten Füllstandes in einem Behälter, welche Anordnung umfaßt:

-   ein auf der Höhe des vorbestimmten Füllstandes angebrachtes mechanisches Schwingungsgebilde,
-   in einem Stapel angeordnete piezoelektrische Elemente,

   -- von denen mindestens eines ein Sender ist, an den im Betrieb über eine Sendesignalleitung ein elektrisches Sendesignal angelegt ist und der das Schwingungsgebilde zu mechanische Schwingungen anregt,
   -- von denen eines ein erster Empfänger und eines ein zweiter Empfänger ist,

--- wobei der erste und der zweite Empfänger die mechanischen Schwingungen des Schwingungsgebildes aufnehmen und in elektrische Signale umwandeln,

--- wobei der erste und der zweite Empfänger jeweils zwei Elektroden aufweisen, von denen eine erste Elektrode auf einer Fläche angeordnet ist, die den Empfänger in Richtung von dessen Polarisation begrenzt und von denen eine zweite Elektrode auf einer Fläche angeordnet ist, die den Empfänger in einer zu dessen Polarisation entgegengesetzten Richtung begrenzt,

--- wobei das elektrische Signal des ersten Empfängers über eine erste Signalleitung abgegriffen wird, die mit der ersten Elektrode des ersten Empfängers verbunden ist, und

--- wobei das elektrische Signal des zweiten Empfängers über eine zweite Signalleitung abgegriffen wird, die mit der ersten Elektrode des zweiten Empfängers verbunden ist,

- eine elektrische Impedanz über die die zweite Signalleitung mit der Sendesignalleitung verbunden ist, und
- eine Schaltung, die aus den beiden elektrischen Signalen ein Empfangssignal erzeugt, das gleich der Summe der beiden elektrischen Signale ist, und
- eine Auswerteeinheit, welche die Frequenz des Empfangssignals bestimmt und mit einer Referenzfrequenz vergleicht.

Gemäß einer Weiterbildung der Erfindung bestimmt die Auswerteeinheit die Frequenz des Empfangssignal, vergleicht diese mit einer Referenzfrequenz und erzeugt ein Ausgangssignal das angibt, daß das mechanische Schwingungsgebilde von einem Füllgut bedeckt ist, wenn die Frequenz einen Wert aufweist der kleiner als die Referenzfrequenz ist, und daß es nicht bedeckt ist, wenn der Wert größer ist.

Gemäß einer weiteren Weiterbildung weist die Anordnung einen Regelkreis auf, der eine zwischen dem elektrischen Sendesignal und dem elektrischen Empfangssignal bestehende Phasendifferenz auf einen bestimmten konstanten Wert regelt, bei dem das Schwingungsgebilde Schwingungen mit einer Resonanzfrequenz ausführt.

Gemäß einer weiteren Ausgestaltung ist die Impedanz eine Kapazität. Gemäß einer anderen Ausgestaltung ist die Impedanz ein Widerstand, eine Induktivität oder eine Kombination aus mindestens einem Widerstand und/oder mindestens einer Induktivität und/oder mindestens einer Kapazität ist.

Gemäß einer Ausgestaltung der ersten Lösungsvariante sind die erste Elektrode des ersten Empfängers und die zweite Elektrode des zweiten Empfängers jeweils über eine Leitung mit einem Bezugspotential, insb. dem Erdpotential, verbunden sind.

Gemäß einer Ausgestaltung der zweiten Lösungsvariante sind die zweite Elektrode des ersten Empfängers und die zweite Elektrode des zweiten Empfängers jeweils über eine Leitung mit einem Bezugspotential, insb. dem Erdpotential, verbunden sind.

Gemäß einer Ausgestaltung der Erfindung enthalen das erste und das zweite elektrische Signal jeweils drei Komponenten auf, nämlich

- ein Meßsignal, das durch die Schwingung des mechanischen Schwingungsgebildes bedingt ist,
- ein erstes zusätzliches Signal, das durch eine mechanische Kopplung zwischen dem Sender und dem Empfänger bedingt ist, und
- ein zweites zusätzliches Signal, das durch eine elektrische Kopplung zwischen dem Sender und dem Empfänger bedingt ist, und
- die Impedanz ist so bestimmt, daß die Amplitude des zweiten zusätzlichen Signals des zweiten Empfängers größer als die Amplitude des ersten zusätzlichen Signals des ersten Empfängers ist.

Gemäß einer weiteren Ausgestaltung weist eine amplituden-und phasengetreue Summe des ersten und des zweiten zusätzlichen Signals des ersten Empfängers eine Amplitude auf, die gleich einer Amplitude der amplituden- und phasengetreuen Summe des ersten und des zweiten zusätzlichen Signals des zweiten Empfängers ist.

Gemäß einer Ausgestaltung ist eine Antiresonanzfrequenz des ersten Empfängers größer als eine Resonanzfrequenz des mechanischen Schwingungsgebildes und eine Antiresonanzfrequenz des zweiten Empfängers ist kleiner als die Resonanzfrequenz.

Die Erfindung und weitere Vorteile werden nun anhand der Figuren der Zeichnung, in denen ein Ausführungsbeispiel gemäß der ersten Variante und ein Ausführungsbeispiel gemäß der zweiten Variante dargestellt sind, näher erläutert; gleiche Elemente sind in den Figuren mit gleichen Bezugszeichen versehen.

Fig. 1 zeigt     einen Längsschnitt durch ein mechanisches Schwingungsgebilde und einen elektro-mechanischen Wandler;

Fig. 2 zeigt     eine schematische Darstellung des Wandlers von Fig. 1 und eine daran angeschlossene Schaltung gemäß einer ersten Variante;

Fig. 3a zeigt     die Amplitude eines Meßsignals eines ersten oder eines zweiten Empfängers in Abhängigkeit von der Frequenz bei hoher und bei niedriger Schwingungsgüte;

Fig. 3b zeigt     die Phase des Meßsignals des ersten Empfängers in Abhängigkeit von der Frequenz bei hoher und bei niedriger Schwingungsgüte;

Fig. 3c zeigt     die Phase des Meßsignals des zweiten Empfängers in Abhängigkeit von der Frequenz bei hoher und bei niedriger Schwingungsgüte;

Fig. 4a zeigt     die Amplitude eines ersten zusätzlichen Signals des ersten oder des zweiten Empfängers in Abhängigkeit von der Frequenz;

Fig. 4b zeigt     die Phase des ersten zusätzlichen Signals des ersten Empfängers in Abhängigkeit von der Frequenz;

Fig. 4c zeigt     die Phase des ersten zusätzlichen Signals des zweiten Empfängers in Abhängigkeit von der Frequenz;

Fig. 5a zeigt     die Amplitude eines zweiten zusätzlichen Signals des ersten Empfängers als durchgezogene Linie und des zweiten Empfängers als gestrichelte Linie in Abhängigkeit von der Frequenz;

Fig. 5b zeigt     die Phase des zweiten zusätzlichen Signals des ersten Empfängers in Abhängigkeit von der Frequenz;

Fig. 5c zeigt     die Phase des zweiten zusätzlichen Signals des zweiten Empfängers in Abhängigkeit von der Frequenz;

Fig. 6a zeigt     die Amplitude des Signals des ersten Empfängers in Abhängigkeit von der Frequenz bei hoher und bei niedriger Schwingungsgüte;

Fig. 6b zeigt     die Phase des Signals des ersten Empfängers in Abhängigkeit von der Frequenz bei hoher und bei niedriger Schwingungsgüte;

Fig. 7a zeigt     die Amplitude des Signals des zweiten Empfängers in Abhängigkeit von der Frequenz bei hoher und bei niedriger Schwingungsgüte;

Fig. 7b zeigt     die Phase des Signals des zweiten Empfängers in Abhängigkeit von der Frequenz bei hoher und bei niedriger Schwingungsgüte;

Fig. 8 zeigt     die Amplituden der beiden elektrischen Signale von Fig. 6a und 7a einer Anordnung mit hoher Schwingungsgüte;

Fig. 9 zeigt     die Amplitude des Empfangssignals;

Fig. 10 zeigt     die Phase des Empfangssignals;

Fig. 11 zeigt     die Amplituden der beiden elektrischen Signale von Fig. 6a und 7a einer Anordnung mit niedriger Schwingungsgüte;

Fig. 12 zeigt     die Amplitude des Empfangssignals einer Anordnung mit niedriger Schwingungsgüte;

Fig. 13 zeigt     die Phase des Empfangssignals einer Anordnung mit niedriger Schwingungsgüte; und

Fig. 14 zeigt     eine schematische Darstellung des Wandlers von Fig. 1 und eine daran angeschlossene Schaltung gemäß einer zweiten Variante;

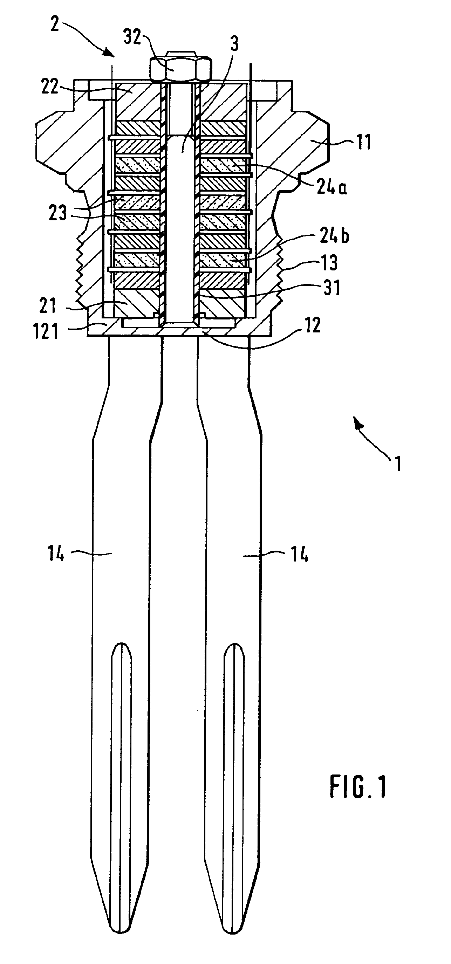

Fig. 1 zeigt einen Längsschnitt durch ein Ausführungsbeispiel eines mechanischen Schwingungsgebildes 1. Es weist ein im wesentlichen zylindrisches Gehäuse 11 auf, das von einer kreisförmigen Membran 12 frontbündig abgeschlossen ist. An das Gehäuse 11 ist ein Gewinde 13 angeformt, mittels dessen die Anordnung in eine nicht dargestellte auf der Höhe des vorbestimmten Füllstands angeordnete Öffnung in einem Behälter einschraubbar ist.

Andere dem Fachmann bekannte Befestigungsweisen, z.B. mittels an dem Gehäuse 11 angeformter Flansche, sind ebenfalls einsetzbar.

An der Außenseite des Gehäuses 11 sind an der Membran 12 zwei in den Behälter weisende Schwingstäbe 14 angeformt. Diese werden durch einen im Inneren des Gehäuses 11 angeordneten elektromechanischen Wandler 2 in Schwingungen senkrecht zu deren Längsachse-versetzt.

Die Erfindung ist jedoch nicht auf mechanische Schwingungssysteme mit zwei Schwingstäben beschränkt; sie kann auch bei Grenzschaltern eingesetzt werden, die nur einen oder keine Schwingstäbe aufweisen. Bei den letztgenannten kommt z.B. nur die schwingende Membran mit einem in dem Behälter befindlichen Füllgut in Kontakt.

Der Wandler 2 weist vier in einem Stapel angeordnete ringförmige piezoelektrische Elemente, auf. An beiden Enden des Stapels ist jeweils ein Metallring 21, 22 angeordnet. Der membran-zugewandte Metallring 21 liegt auf einer ringförmigen Schulter 121 auf, die an einer äußeren Ringfläche der Membran 12 angeformt ist. In der Mitte der Membran 12 ist eine in das Innere des Gehäuses 11 weisende Spannschraube 3 vorgesehen. Diese ist mit einer Isolation 31 versehen und führt durch den Wandler 2 hindurch. Auf dem membran-abgewandten Ende der Spannschraube 3 ist eine Mutter 32 aufgeschraubt. Diese liegt auf dem membran-abgewandten Metallring 22 auf. Die Mutter 32 ist angezogen. Die Membran 12 ist somit vorgespannt.

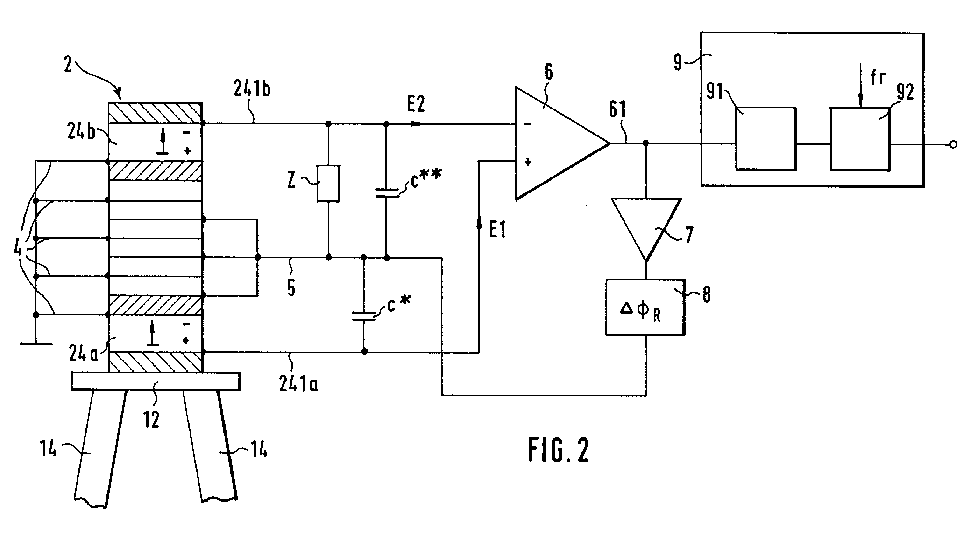

Die beiden in der Mitte des Stapels befindlichen piezoelektrischen Elemente arbeiten als Sender 23. Die beiden äußeren piezoelektrischen Elemente dienen als erster und zweiter Empfänger 24a und 24b. Fig. 2 zeigt eine schematische Darstellung eines ersten Ausführungsbeispiels des Wandlers 2 und eine daran angeschlossene Auswerteeinheit.

Die Sender 23 und die Empfänger 24a, 24b weisen jeweils zwei Elektroden auf. Diese sind auf einander gegenüberliegenden Flächen der piezoelektrischen Elemente angeordnet.

Je eine Elektrode jedes Senders 23 ist über eine Leitung 4 mit einem Bezugspotential, z.B. Erde, verbunden ist. Die jeweilige andere Elektrode der Sender 23 ist jeweils mit einer Sendesignalleitung 5 verbunden.

Alle piezoelektrischen Elemente, also die Sender 23 und die Empfänger 24a, 24b sind jeweils parallel zur Längsachse des Stapels polarisiert.

Der erste und der zweite Empfänger 24a, 24b weisen jeweils eine erste und eine zweite Elektrode auf. Die erste Elektrode ist auf einer Fläche angeordnet, die den jeweiligen Empfänger 24a, 24b in Richtung von dessen Polarisation begrenzt und die zweite Elektrode ist auf einer Fläche angeordnet, die den jeweiligen Empfänger 24a, 24b in einer zu dessen Polarisation entgegengesetzten Richtung begrenzt.

Im Betrieb werden die elektrischen Empfangssignale $E_1$, $E_2$ des ersten und des zweiten Empfängers 24a,24b jeweils über eine mit einer der Elektroden der Empfänger 24a, 24b verbundene Signalleitungen 241a, 241b abgegriffen. Die jeweils verbleibende andere Elektrode ist über jeweils eine Leitung 4 mit dem Bezugspotential verbunden.

Die Richtung der Polarisation der Sender 23 ist derart zu wählen, daß alle Sender 23 in Abhängigkeit von einer an der Sendesignalleitung 5 anliegenden Wechselspannung gleichphasige Dickenoszillationen ausführen. Entsprechend oszilliert die Höhe des Stapels. Da dieser durch die Spannschraube 3, die Mutter 32 und die Schulter 121 eingespannt und mit der Membran 12 gekoppelt ist, wird die Membran 12 durch diese Dickenoszillationen zu Biegeschwingungen angeregt. Die Schwingstäbe 14 sind endseitig fest mit der Membran 12 verbunden. Biegeschwingungen der Membran 12 versetzten die Schwingstäbe 14 folglich in Schwingungen senkrecht zu deren Längsachse.

Entsprechend führt eine Schwingung der Schwingstäbe 14 zu einer Biegeschwingung der Membran 12, die wiederum eine Dickenoszillation des Stapel bewirkt. Diese Dickenoszillation führt zu einer Veränderung der über den Empfängern 24a, 24b abfallenden Spannungen. Ein entsprechendes Signal $E_1$, $E_2$ steht über die jeweilige Signalleitung 241a, 241b zur Verfügung.

Die Amplitude dieser elektrischen Signale $E_1$, $E_2$ ist um so größer, je größer die mechanische Schwingungsamplitude der Schwingstäbe 14 ist. In Ausnutzung dieser Tatsache wird die Anordnung vorzugsweise bei deren Resonanzfrequenz $f_r$ betrieben. Bei der Resonanzfrequenz $f_r$ ist die mechanische Schwingungsamplitude maximal.

Betrachtet man einen harmonischen Oszillator als Beispiel für ein ideales Schwingungssystem, so weist dessen Schwingungsamplitude ein einziges Maximum in Abhängigkeit von der Schwingungsfrequenz auf. Die Phasendifferenz zwischen der Schwingungsanregung und der Schwingung des Oszillator erfährt im Bereich dieses Maximums einen Phasensprung von 180°. Bei der Resonanzfrequenz ist die Schwingungsamplitude maximal und die Phasendifferenz beträgt 90°.

Basierend auf dem gleichen physikalischen Grundprinzip besteht auch bei der vorliegenden Anordnung im Resonanzfall eine feste Phasenbeziehung zwischen dem Sendesignal und jeweils einem der elektrischen Signale $E_1$, $E_2$. Der feste Wert dieser Phasendifferenz ist abhängig von der Polarisation der Sender 23 und der Empfänger 24a, 24b und von den mechanischen und elektrischen Schwingungseigenschaften der Anordnung. Messungen haben gezeigt, daß die Werte in der Regel zwischen 60° und 90° liegen.

Damit das mechanische Schwingungsgebilde in Schwingungen bei dessen Resonanzfrequenz $f_r$ versetzt wird, weisen die eingangs beschriebenen Anordnungen aus dem Stand der Technik einen Regelkreis auf, der eine zwischen dem Sendesignal und einem der elektrischen Signale $E_1$, $E_2$ bestehende Phasendifferenz auf einen bestimmten konstanten Wert $\Delta\phi_R$ regelt, z.B. indem eines der elektrischen Signale $E_1$, $E_2$ über einen Phasenschieber und einen Verstärker auf das Sendesignal zurückgekoppelt wird. Bei der in der DE-44 19 617 beschriebenen Anordnung wird abwechselnd das eine oder das andere der beiden Empfänger-Signale genutzt.

Bei einem harmonischen Oszillator bewirkt eine Dämpfung oder eine Reduktion der Schwingungsgüte eine Reduktion der maximalen Amplitude im Resonanzfall. Die Phase steigt in einem solchen Fall in Abhängigkeit von der Frequenz nicht sprunghaft sondern kontinuierlich an und zwar um so langsamer, je größer die Dämpfung bzw. die Reduktion der Schwingungsgüte ist. Insgesamt erfolgt jedoch auch bei sehr großer Dämpfung eine Phasenänderung von insgesamt 180° und bei der Resonanzfrequenz besteht eine Phasendifferenz von 90°. Der feste der Resonanz entsprechende Wert der Phasendifferenz von 90° existiert immer und wird bei der Resonanzfrequenz $f_r$ angenommen.

Im Unterschied zu einem idealen Oszillator bestehen bei den oben genannten Anordnungen aus dem Stand der Technik Kopplungen elektrischer und mechanischer Art zwischen den Sendern 23, den Empfängern 24a, 24b und dem mechanischen Schwingungsgebilde. Die mechanische Kopplung ist im wesentlichen durch die mechanische Einspannung des Wandlers 2 bedingt. So führt z.B. ein den Sender 23 anregendes Sendesignal auch dann zu einem elektrischen Signal $E_1$ bzw. $E_2$, wenn die Schwingstäbe 14 eingespannt sind und folglich keine Bewegung ausführen.

Die elektrische Kopplung besteht zwischen den Sendern 23 und den Empfängern 24a, 24b. Diese sind nicht, wie dies ideal angenommen wird, elektrisch unabhängig voneinander, sondern es besteht eine, in der Regel kapazitive, Verbindung zwischen ihnen. Diese Verbindung ist in Fig. 2 in Form eines Ersatzschaltbildes durch die zwischen der Sendesignalleitung 5 und den jeweiligen Signalleitungen 241a, 241b eingefügte Kapazitäten C*, C** dargestellt.

Betrachtet man nur einen Empfänger 24a, so setzt sich dessen Signal $E_1$ aus drei Komponenten zusammen, nämlich einem Meßsignal $E_{M1}$, einem ersten durch die mechanische Kopplung bedingten zusätzlichen Signal $E_{mech1}$ und einem durch die elektrische Kopplung bedingten zweiten zusätzlichen Signal $E_{el1}$.

$$E_1 = E_{M1} + E_{el1} + E_{mech1}$$

Die Polarisation eines piezoelektrischen Elements ist gleich der Richtung, die ein durch den piezoelektrischen Effekt bedingtes elektrisches Feld aufweist, also von einer positiv geladenen Seite zu einer negativ geladenen Seite, wenn das piezolektrische Element parallel zur Längsachse des Stapels zusammmegedrückt ist.

Bei dem gezeigten Ausführungsbeispiel weist die Polarisation des ersten Empfänger 24a in membranabgewandter Richtung. Eine membran-abgewandte Fläche des ersten Empfängers 24a begrenzt den Empfänger 24a in Richtung von dessen Polarisation. Eine membran-zugewandte Fläche des ersten Empfängers 24a, begrenzt diesen in einer zu dessen Polarisation entgegengesetzten Richtung. Entsprechend befindet sich die erste Elektrode des ersten Empfängers bei dem in Fig. 2 dargestellten Ausführungsbeispiel auf der membran-abgewandten Fläche und die zweite Elektrode auf der membran-zugewandten Fläche.

Die auf der membran-zugewandten Fläche des ersten Empfängers 24a angeordnete zweite Elektrode ist mit der Signalleitung 241a verbunden, die auf der membran-abgewandten Fläche des ersten Empfängers 24a angeordnete erste Elektrode ist über die Leitung 4 mit dem Bezugspotential verbunden.

Äquivalent hierzu ist eine Anordnung, bei der die Polarisation des ersten Empfängers 24a in membranzugewandter Richtung weist und die membran-abgewandte zweite Elektrode mit der Signalleitung 241a verbunden ist.

Das Meßsignal $E_{M1}$ beruht auf der Schwingung des mechanischen Schwingungsgebildes und weist eine frequenzabhängige Amplitude $A_{M1}(f)$ und eine frequenzabhängige Phase $\Delta\phi_{M1}(f)$ auf. Mit Phase ist hier jeweils der Phasenversatz bezeichnet, den die jeweilige Komponente des elektrischen Signals $E_1$ bezogen auf das elektrische Sendesignal aufweist.

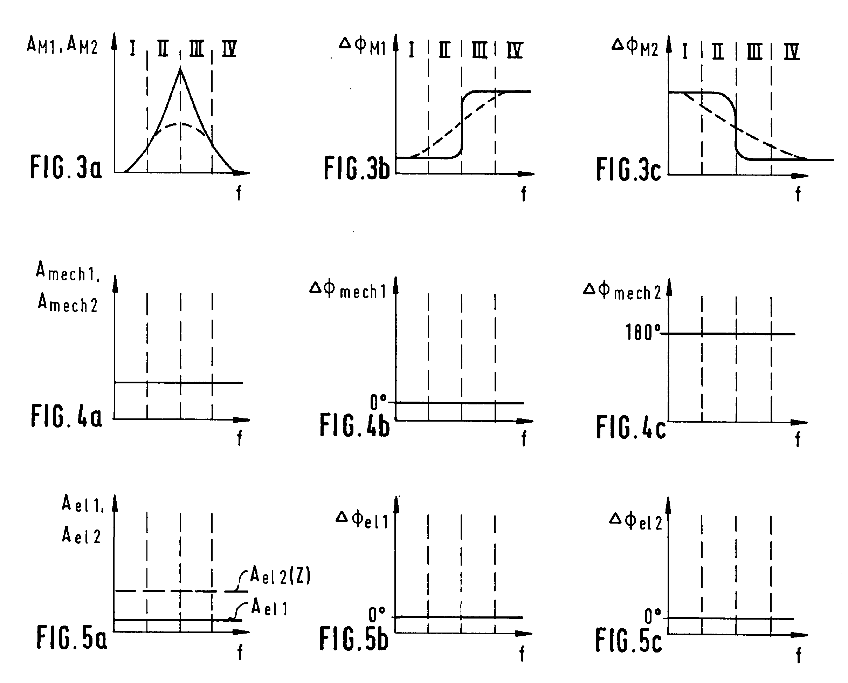

Fig. 3a zeigt die Amplitude $A_{M1}(f)$ und Fig. 3b die Phase $\Delta\phi_{M1}(f)$ des Meßsignals $E_{M1}$ in Abhängigkeit von der Frequenz f. Die Kurven können rechnerisch durch Simulationsrechnungen, z.B. durch Finite-Elemente-Rechnungen bestimmt werden. Experimentell können sie ausgemessen werden, indem die Sendesignalleitung 5 an einen Frequenzgenerator angeschlossen wird und Phase und Amplitude der Schwingung der Schwingstäbe 14 in Abhängigkeit von der Frequenz des Frequenzgenerators, z. B. mit einem Laservibrometer, bestimmt werden.

In beiden Figuren entspricht jeweils die durchgezogene Linie einer Anordnung mit hoher Schwingungsgüte und die gestrichelte Linie einer Anordnung mit niedriger Schwingungsgüte. Sowohl die Amplitude $A_{M1}(f)$ als auch die Phase $A\phi_{M1}(f)$ des Meßsignals weisen in beiden Fällen den für einen harmonischen Oszillator typischen vorgehend bereits beschriebenen Verlauf auf.

Aufgrund der Anschlußweise des ersten Empfängers 24a bezogen auf dessen Polarisation beträgt die Phase $\Delta\phi_{M1}(f)$ des Meßsignals $E_{M1}(f)$ unterhalb der Resonanzfrequenz $f_r$ 0° und oberhalb der Resonanzfrequenz $f_r$ 180°.

Die beiden zusätzlichen Signale $E_{mech1}$, $E_{el1}$ weisen jeweils eine im wesentlichen konstante Amplitude $A_{mech1}$, $A_{el1}$ und eine im wesentlichen konstante Phase $\Delta\phi_{mech1}$, $\Delta\phi_{el1}$ auf. Mit Phase ist auch hier der Phasenversatz der jeweiligen Komponente des elektrischen Signals $E_1$ bezogen auf das elektrische Sendesignal bezeichnet.

Die Phase $\Delta\phi_{mech1}$ des ersten zusätzlichen Signals $E_{mech1}$ ist konstant und gleich der Phase $\Delta\phi_{M1}(f)$, die das Meßsignal $E_{M1}$ (f) asymptotisch für sehr kleine Frequenzen annimmt.

Die Phase $\Delta\phi_{el1}$ des zweiten zusätzlichen Signals $E_{el1}$ ist ebenfalls konstant und zusätzlich unabhängig von der Polarisation des Empfängers. Sie beträgt immer ungefähr 0°.

Fig. 4a zeigt die Amplitude $A_{mech1}$ und Fig. 4b die Phase $\Delta\phi_{mech1}$ des ersten zusätzlichen Signals $E_{mech1}$ in Abhängigkeit von der Frequenz f. Die Kurven können rechnerisch durch Simulationsrechnungen, z.B. durch Finite-Elemente-Rechnungen bestimmt werden. Experimentell sind sie meßbar wenn die beiden anderen Signalkomponenten, nämlich das Meßsignal $E_{M1}$ und das zweite zusätzliche Signal $E_{el1}$ unterbunden sind.

Das Meßsignal $E_{M1}$ kann dadurch ausgeschaltet werden, daß die Schwingstäbe 14 mechanisch fest eingespannt sind. Das zweite zusätzliche Signal $E_{el1}$ ist vermeidbar durch eine elektrische Isolation des Empfängers 24a, z.B. in Form eines geerdeten metallischen Schirms. Auch empfiehlt es sich hier nach Möglichkeit kurze Leitungen zu verwenden, um Einkopplungen von elektrischen Signalen jeglicher Art gering zu halten.

Sind das Meßsignal $E_{M1}$ und das zweite zusätzliche Signal $E_{el1}$ unterbunden, d.h. weist deren Amplitude einen Wert von nahezu Null auf, so ist das Signal $E_1$ gleich dem ersten zusätzlichen Signal $E_{mech1}$ und kann z.B. mittels eines Oszilloskops ausgemessen werden.

Die durchgezogene Linie in Fig. 5a zeigt die Amplitude $A_{el1}$ und die durchgezogene Linie in Fig. 5b die Phase $\Delta\phi_{el1}$ des zweiten zusätzlichen Signals $E_{el1}$ des ersten Empfängers 24a in Abhängigkeit von der Frequenz f. Auch diese Kurven können durch Simulationsrechnungen ermittelt werden. Experimentell können sie aufgenommen werden indem z. B. nicht-polarisierte piezoelektrische Elemente als Sender 23 und als Empfänger 24a, 24b eingesetzt werden. Bei diesen wird durch ein Sendesignal keinerlei mechanische Bewegung erzeugt und das Signal $E_1$ entspricht folglich dem auf elektrischer Kopplung beruhenden zweiten zusätzlichen Signals $E_{el1}$. Dieses kann ebenfalls mittels eines Oszilloskops ausgemessen werden.

Die Amplituden $A_{mech1}$, $A_{el1}$ und die Phasen $\Delta\phi_{mech1}$, $\Delta\phi_{el1}$ der zusätzlichen Signale $E_{mech1}$, $E_{el1}$ sind nahezu frequenzunabhängig und stehen in eindeutigem Zusammenhang zu dem mechanischen Aufbau der jeweiligen Anordnung und den elektrischen und mechanischen Eigenschaften der Sender 23 und der Empfänger 24a, 24b. Typischerweise ist die Amplitude $A_{mech1}$ wesentlich größer als die Amplitude $A_{el1}$.

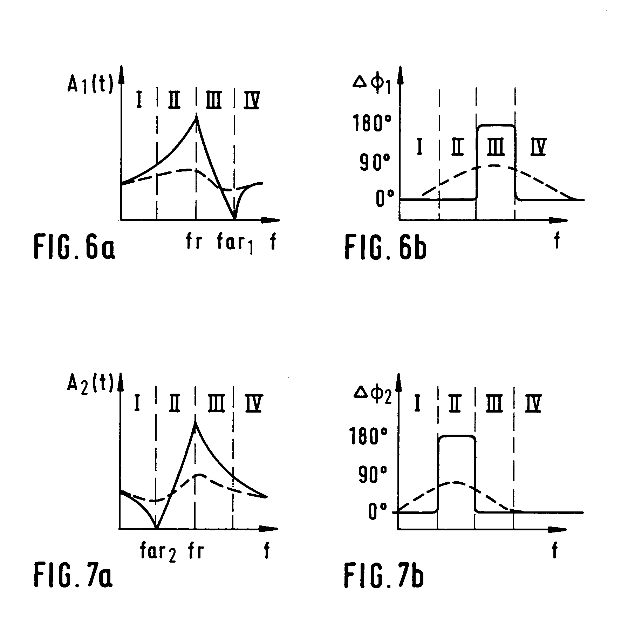

Fig. 6a zeigt die Amplitude $A_1$ (f) und Fig. 6b die Phase $\Delta\phi_1$ (f) des Signals $E_1$. Die beiden Kurven ergeben sich aus der phasen- und amplitudengetreuen Überlagerung der drei zuvor beschriebenen Komponenten des Signals $E_1$.

$$E_1 = A_1 e^{i\Delta\phi1} = A_{M1} e^{i\Delta\phi M1} + A_{mech1} e^{i\Delta\phi mech1} + A_{el1} e^{i\Delta\phi el1}$$

Beide Kurven weisen jeweils vier Bereiche I, II, III, IV auf, die nachfolgend stark vereinfacht beschrieben sind.

In einem ersten Bereich I ist das erste zusätzliche Signal $E_{mech1}$ dominant, da es die größte Amplitude $A_{mech1}$ aufweist.

Die Phase $\Delta\phi_{mech1}$ dieses Signals ist gleich der Phase $\Delta\phi_{M1}$ (f) des Meßsignals $A_{M1}$ (f) und gleich der Phase $\Delta\phi_{el1}$ des zweiten zusätzlichen Signal $A_{el1}$. Die resultierende Amplitude $A_1$ (f) entspricht somit der Summe der Amplituden $A_{el1}$ (f), $A_{el1}$ und $A_{mech1}$.

$$A_1(f) \cong A_{mech1}(f) + A_{M1}(f) + A_{el1}$$

Die resultierende Phase $\Delta\phi_1$ (f) beträgt in diesem Bereich I 0°.

In einem zweiten Bereich II übernimmt das Meßsignal $E_{M1}$ aufgrund dessen ansteigender und die Amplitude $A_{mech1}$ des ersten zusätzlichen Signals übersteigender Amplitude $A_{M1}$ (f) die Führung. Dessen Phase $\Delta\phi_{M1}$ (f) beträgt in diesem Bereich II ebenfalls 0°. Die Amplitude $A_1$ des resultierenden elektrischen Signals $E_1(f)$ entspricht also auch hier der Summe der Amplituden des Meßsignals $A_{M1}$ (f), des ersten zusätzlichen Signals $A_{mech1}$ und des zweiten zusätzlichen Signals $A_{el1}$.

$$A_1(f) \cong A_{M1}(f) + A_{el1} + A_{mech1}$$

Zwischen dem Bereich II und einem Bereich III liegt die Resonanzfrequenz $f_r$. Entsprechend weist das Meßsignal $E_{M1}$ einen Phasensprung von 180° auf. Aufgrund dessen nun absteigender, die Amplitude $A_{mech1}$ des ersten zusätzlichen Signals jedoch immer noch übersteigenden Amplitude $A_{M1}$ (f) ist dieses Signal auch im Bereich III dominant. Die Amplitude

$A_1$ des Empfangssignals entspricht im Bereich III somit im wesentlichen dem um die Summe der Amplitude $A_{mech1}$ des ersten zusätzlichen Signals und $A_{el1}$ des zweiten zusätzlichen Signals reduzierten Amplitude $A_{M1}$ (f) des Meßsignals.

$$A_1(f) \cong A_{M1}(f) - (A_{mech1} + A_{el1})$$

Sie nimmt entsprechend der Abnahme der Amplitude des Meßsignals $A_{M1}$ (f) mit der Frequenz ab. Die Phase beträgt in diesem Bereich III ungefähr 180°. Eine Bereichsgrenze zwischen dem Bereich III und einem Bereich IV ist dadurch gegeben, daß die Amplitude $A_{M1}$(f) des Meßsignals ungefähr gleich der Summe der Amplituden der beiden zusätzlichen Signale $A_{mech1}$, $A_{el1}$ ist. Die Frequenz, bei der dies erfolgt ist nachfolgend als Antiresonanzfrequenz $f_{ar1}$ bereichnet.

In dem Bereich IV ist erneut das erste zusätzliche Signal $E_{mech1}$ aufgrund dessen die Amplitude $A_{M1}$ des Meßsignals übersteigenden Amplitude $A_{mech1}$ dominant. Die Amplitude $A_1$ des elektrischen Signals $E_1$ der ersten Elektrode 24a steigt im Bereich IV an und ist im wesentlichen gleich der um die Amplitude $A_{M1}$ (f) des Meßsignals reduzierten Summe der beiden Amplituden $A_{mech1}$ und $A_{el1}$ der beiden zusätzlichen Signale.

$$A_1(f) \cong A_{mech1} + A_{el1} - A_{M1}(f)$$

Die Amplitude $A_1$ (f) nimmt asymptotisch, bei sehr niedrigen und bei sehr hohen Frequenzen (f → 0; f → ∞) einen Wert an, der gleich der Summe $A_{mech1} + A_{el1}$ ist. Die Phase $\Delta\phi_1$ (f) weist im Bereich IV einen Wert von 0° auf.

Die Phasendifferenz zwischen dem elektrischen Sendesignal und dem elektrischen Signal $E_1$ weist in Abhängigkeit von der Frequenz zwei einander entgegengerichtete Phasensprünge von jeweils 180° auf. Es gibt folglich zwei Frequenzen, bei denen die Phase $\Delta\phi_1$ (f) den eingangs beschriebenen festen der Resonanz entsprechenden Wert, hier 90°, aufweist, nämlich an der Bereichsgrenze zwischen dem Bereich II und dem Bereich III und an der Bereichsgrenze zwischen dem Bereich III und dem Bereich IV. Bei der zweiten als Antiresonanzfrequenz $f_{ar1}$ bezeichneten Frequenz, ist die Amplitude des elektrischen Signals $E_1$ vernachlässigbar gering. Würde das elektrische Signal $E_1$ verwendet, um einen eingangs beschriebenen Regelkreis zu betreiben, so wäre das frequenzbestimmende Glied des Regelkreises aufgrund dessen vernachlässigbar geringer Amplitude bei der Antiresonanzfrequenz $f_{ar1}$ unwirksam. Dadurch wäre die Rückkopplung unterbrochen und die Selbsterregungsbedingung könnte nicht erfüllt werden. Die erste Frequenz ist im wesentlichen gleich der Resonanzfrequenz $f_r$ des mechanischen Schwingungsgebildes. Sie ist die maßgebliche Frequenz beim Betrieb der Anordnung und würde durch einen entsprechenden Regelkreis automatisch eingestellt.

Tritt nun der Fall ein, daß das mechanische Schwingungsgebilde gedämpft ist oder eine reduzierte Schwingungsgüte aufweist, so zeigen Amplitude $A_{M1}$ (f) und Phase $\Delta\phi_{M1}$ (f) des Meßsignals den in den Figuren 3a und 3b gestrichelt dargestellten Verlauf. Die Amplitude $A_{M1}$ (f) steigt und sinkt erheblich langsamer mit der Frequenz und weist einen deutlich geringeren Maximalwert auf. Die Phase $\Delta\phi_{M1}$ (f) zeigt keinen Phasensprung, sondern steigt kontinuierlich mit der Frequenz. Je größer die Reduktion der Schwingungsgüte des Systems ist, um so geringer ist der Maximalwert der Amplitude und um so geringer ist die Steigung der Phase. Die Phase $\Delta\phi_{M1}$ (f) erreicht asymptotisch jedoch immer die Werte 0° und 180° und bei der Resonanzfrequenz $f_r$ beträgt sie nach wie vor 90°. Die zusätzlichen Signale $E_{el1}$, $E_{mech1}$ bleiben unverändert.

Amplitude $A_1$ (f) und Phase $\Delta\phi_1$ (f) des sich aus der amplituden- und phasengetreuen Überlagerung der drei Komponenten ergebenden Signals $E_1$ unterscheiden sich deutlich von dem erstgenannten Beispiel, bei dem keine Reduktion der Schwingungsgüte vorlag. Die Maxima der Amplitude $A_1$ (f) sind sehr viel weniger ausgeprägt und die Phase $\Delta\phi_1$ (f) weist anstelle der beiden einander entgegengesetzten Phasensprünge von jeweils 180° zwei einander entgegengerichtete kontinuierliche Phasenänderungen auf. Der maximale Phasenunterschied ist deutlich geringer als 180°. Abhängig von der Schwingungsgüte des Systems ist er sogar geringer als 90°. Die Figuren zeigen die Amplituden $A_1$, $A_2$ und die Phasen $\Delta\phi_1$, $\Delta\phi_2$ des ersten und des zweiten elektrischen Signals $E_1$, $E_2$ für diesen Fall jeweils als gestrichelte Linie.

Tritt also eine Dämpfung des mechanischen Schwingungsgebildes, z.B. in Schaum oder in einem viskosen Medium, oder eine anders geartete Reduktion der Schwingungsgüte des Systems, z.B. bedingt durch eine Lockerung der mechanischen Verbindung zwischen den als Sender arbeitenden piezoelektrischen Elementen und dem mechanischen Schwingungsgebilde, auf, so weist die Phasendifferenz zwischen dem elektrischen Sendesignal und dem elektrischen Signal $E_1$ in Abhängigkeit von der Frequenz zwar noch zwei einander entgegengerichtete kontinuierliche Phasenänderungen auf, der maximale Phasenunterschied kann jedoch sehr gering sein. Die maximale Phasendifferenz ist um so geringer, je geringer der Abstand zwischen der Resonanzfrequenz $f_r$ und der Antiresonanzfrequenz $f_{ar1}$ ist.

Ein Regelkreis, wie er aus dem Stand der Technik entnehmbar ist, der das mechanische Schwingungssystem zu Schwingungen mit der Resonanzfrequenz $f_r$ erregt, indem er eine feste, der Resonanz entsprechende Phasenbeziehung zwischen dem Sendesignal und dem Signal $E_1$ eines Empfängers herstellt, zeigt in diesem Fall eine Fehlfunktion. Damit die beschriebene Anordnung im unbedeckten Zustand bei hoher Schwingungsgüte funktionstüchtig ist, müßte die Phasendifferenz z.B. 90° betragen. Tritt nun aufgrund der Eigenschaften des Füllgutes oder aufgrund einer Reduktion der Schwingungsgüte der vorbeschriebene Fall ein, daß die Phase $\Delta\phi_1$ (f) des Signals $E_1$ diesen festen Wert von 90° über den gesamten Frequenzbereich nicht mehr annimmt, so ist eine zuverlässige Anregung des mechanischen Schwingungssystems nicht mehr möglich. Die dem Stand der Technik entnommene Anordnung ist folglich nicht funktionsfähig.

Gemäß der ersten Variante der Erfindung ist die zweite Signalleitung 241b des zweiten Empfängers 24b mit der Sendesignalleitung 5 über eine elektrische Impedanz Z verbunden. Die zweite Signalleitung 241b des zweiten Empfängers 24b ist mit der ersten Elektrode des zweiten Empfängers 24 verbunden ist, die auf einer den Empfänger 24b in Richtung von dessen Polarisation begrenzenden Fläche angeordnet ist. Die erste Signalleitung 241a des ersten Empfängers 24a ist, wie bereits beschreiben, mit der zweiten Elektrode des ersten Empfängers 24a verbunden, die auf der den ersten Empfänger 24a in einer zu dessen Polarisation entgegengesetzten Richtung begrenzenden Fläche angeordnet ist. Es wird ein Empfangssignal E gebildet, das gleich der Differenz der beiden elektrischen Signale $E_1$, $E_2$ ist.

Die Polarisation des zweiten Empfängers 24b weist bei dem gezeigten Ausführungsbeispiel ebenfalls in membranabgewandter Richtung. Die auf der membran-abgewandten Fläche des zweiten Empfängers 24b angeordnete erste Elektrode ist mit der zweiten Signalleitung 241b und die auf der membran-zugewandten Ffläche angeordnete zweite Elektrode ist über die Leitung 4 mit dem Bezugspotential verbunden.

Äquivalent hierzu ist eine Anordnung, bei der die Polarisation des zweiten Empfängers 24b in membranzugewandter Richtung weist und die membran-zugewandte erste Elektrode mit der Signalleitung verbunden ist.

Die Überlagerung der beiden Signale $E_1$ und $E_2$ erfolgt durch einen Operationsverstärker 6. Das Signal $E_1$ liegt an dem nicht-invertierenden Eingang, das Signal $E_2$ am invertierenden Eingang des Operationsverstärkers 6 an. Am Ausgang des Operationsverstärkers 6 steht über eine Empfangssignalleitung 61 die phasen- und amplitudengetreue Differenz der beiden elektrischen Signale $E_1$ und $E_2$ zur Verfügung.

Der Verlauf von Phase $\Delta\phi_1$ (f) und Amplitude $A_1$ (f) des ersten elektrischen Signals $E_1$ des ersten Empfängers 24a ist vorangehend bereits im Zusammenhang mit den Figuren 3a, 3b bis 6a, 6b erläutert worden.

Das elektrische Signal $E_2$ des zweiten Empfängers 24b setzt sich genauso aus drei Komponenten zusammen wie das elektrische Signal $E_1$. Die Amplituden $A_{M2}$ (f) und $A_{mech2}$ des Meßsignals $E_{M2}$ und des ersten zusätzlichen Signals $E_{mech2}$ des elektrischen Signals $E_2$ sind identisch zu den entsprechenden Amplituden des elektrischen Signals $E_1$ des ersten Empfängers 24a.

$$A_{M1} = A_{M2}; \quad A_{mech1} = A_{mech2}$$

Die Phasen $\Delta\phi_{M2}$ des Meßsignals $E_{M2}(f)$ und $\Delta\phi_{mech2}$ des ersten zusätzlichen Signals $E_{mech2}$ des zweiten Empfängers 24b sind gegenüber den entsprechenden Phasen der entsprechenden Signale des ersten Empfängers um 180° versetzt. Die Phase $\Delta\phi_{M2}$ des Meßsignals $E_{M2}(f)$ ist in Fig. 3c dargestellt. Sie beträgt unterhalb der Resonanzfrequenz $f_r$ 180° und oberhalb der Resonanzfrequenz $f_r$ 0°. Die Phase $\Delta\phi_{mech2}$ des ersten zusätzlichen Signals $E_{mech2}$ des zweiten Empfängers 24b beträgt, wie in Fig. 4c dargestellt, 180°. Ursache hierfür ist, das das Signal $E_1$ des ersten Empfängers 24a über die Signalleitung 241a des ersten Empfängers 24a mit der zweiten Elektrode verbunden ist, die auf der den ersten Empfänger 24a in einer dessen Polarisation entgegengesetzten Richtung begrenzenden Fläche angeordnet ist und daß das Signal $E_2$ des zweiten Empfängers 24b mit der ersten Elektrode verbunden ist, die auf der den zweiten Empfänger 24b in dessen Polarisationsrichtung begrenzenden Fläche angeordnet ist.

Die elektrische Impedanz Z bewirkt eine elektrische Kopplung zwischen den Sendern 23 und dem Empfänger 24b. Die Phase $\Delta\phi_{el2}$ des zweiten zusätzliche Signals $E_{el2}$ bleibt hierdurch im wesentlichen unverändert. Die Phase $\Delta\phi_{el2}$ des zweiten durch die kapazitive Kopplung bedingten zusätzlichen Signals $E_{el2}$ ist unabhängig von der Polarisation des piezoelektrischen Elements. Die Phase $\Delta\phi_{el2}$ hängt im wesentlichen nicht davon ab, mit welcher Elektrode des zweiten Empfängers 24b die Signalleitung 241b verbunden ist. Sie beträgt daher genau wie die Phase $\Delta\phi_{el1}$ des ersten zusätzliche Signals $E_{el1}$ ungefähr 0°.

Die Impedanz Z ist vorzugsweise so zu dimensionieren, daß die Amplitude $A_{el2}$ (Z) des zweiten zusätzlichen Signals $E_{el2}$ des zweiten Empfängers 24b größer als die Amplitude $A_{mech1}$ des ersten zusätzlichen Signals $E_{mech1}$ des ersten Empfängers 24a ist

$$A_{el2}(Z) > A_{mech1}$$

und, daß eine Amplitude $A_{\Sigma 1}$ einer phasen- und amplitudengetreuen Addition des ersten und des zweiten zusätzlichen Signals $E_{mech1} + E_{el1}$ des ersten Empfängers 24a vorzugsweise gleich der Amplitude $A_{\Sigma 2}$ der phasen- und amplitudengetreuen Addition des ersten und des zweiten zusätzlichen Signals $E_{mech2} + E_{el2}$ des zweiten Empfängers 24b ist.

$$A_{\Sigma 1} = \left| A_{el1}\, e^{i\Delta\phi el1} + A_{mech1}\, e^{i\Delta\phi mech1} \right|$$
$$= \left| A_{el2}\, e^{i\Delta\phi el2} + A_{mech2}\, e^{i\Delta\phi mech2} \right|$$
$$= A_{\Sigma 2}$$

Die Impedanz Z ist z.B. ein ohmscher Widerstand, eine Kapazität, eine Induktivität oder eine Kombination der genannten Bauteile.

Untersuchungen haben gezeigt, daß es in der Regel genügt eine Kondensator mit entsprechender Kapazität einzusetzen. Ein optimaler Wert der Kapazität ist entweder über Modellrechnungen vorab zu bestimmen oder durch eine, z.B. mit einem abstimmbaren Kondensator auszuführende, Meßreihe zu ermitteln. In Fig. 5a ist eine entsprechende Amplitude $A_{el2}$ (Z) des zweiten zusätzlichen Signals $E_{el2}$ als gestrichelte Linie eingezeichnet.

Da diese Amplitude $A_{e12}$ (Z) größer ist als die Amplitude $A_{mech2}$ des ersten zusätzlichen Signals $E_{mech2}$ ist das zweite zusätzliche Signal $E_{el2}$ in den Bereichen I und IV dominant. Eine amplituden- und phasengetreue Addition der drei Komponenten führt zu dem in Fig. 7a gezeigten Verlauf der Amplitude $A_2$ (f) des zweiten Signals $E_2$. Die Amplitude $A_2$ fällt im ersten Bereichen I monoton ab. An der Bereichsgrenze zum Bereich II ist die Amplidude $A_{el2}$ (Z) ungefähr gleich der Summe der Amplitude $A_{M2}$ (f) des Meßsignals $E_{M2}$ (f) und der Amplitude $A_{mech2}$ des ersten zusätzlichen Signals $E_{mech2}$. Die der Bereichsgrenze entsprechende Frequenz ist die Antiresonanzfrequenz $f_{ar2}$ des zweiten Empfängers 24b. In den Bereichen II und III ist das Meßsignal $E_M$ (f) dominant. Die Amplitude $A_2$ (f) steigt im Bereich II an und fällt im Bereich IV wieder ab. Die Bereichsgrenze zwischen dem Bereich II und dem Bereich III entspricht der Resonanzfrequenz $f_r$. Im Bereich IV fällt die Amplitude $A_2$ (f) weiter ab.

Bei dem Signal $E_2$ liegt die Antiresonanzfrequenz $f_{ar2}$ unterhalb der Resonanzfrequenz $f_r$, wohingegen bei dem Signal $E_1$ die Antiresonanzfrequenz $f_{ar1}$ oberhalb der Resonanzfrequenz $f_r$ liegt.

Die Amplitude $A_2$ des elektrischen Signals $E_2$ des zweiten Empfängers 24b nimmt asymptotisch, bei sehr niedrigen und bei sehr hohen Frequenzen ($f \to 0$; $f \to \infty$) einen Wert an, der gleich der Differenz $A_{el2}$ (Z) - $A_{mech2}$ ist.

Die Phase $\Delta\phi_2$ des elektrischen Signals des zweiten Empfängers 24b ist in Fig. 7b dargestellt. Sie beträgt im Bereich I 0°, im Bereich II 180° und in den Bereichen III und IV 0°.

Ist die Schwingungsgüte der Anordnung reduziert, weisen Amplitude $A_2$ und Phase $\Delta\phi_2$ des zweiten elektrischen Signals $E_2$ den in den Figuren 7a und 7b gestrichelt eingezeichneten Verlauf auf.

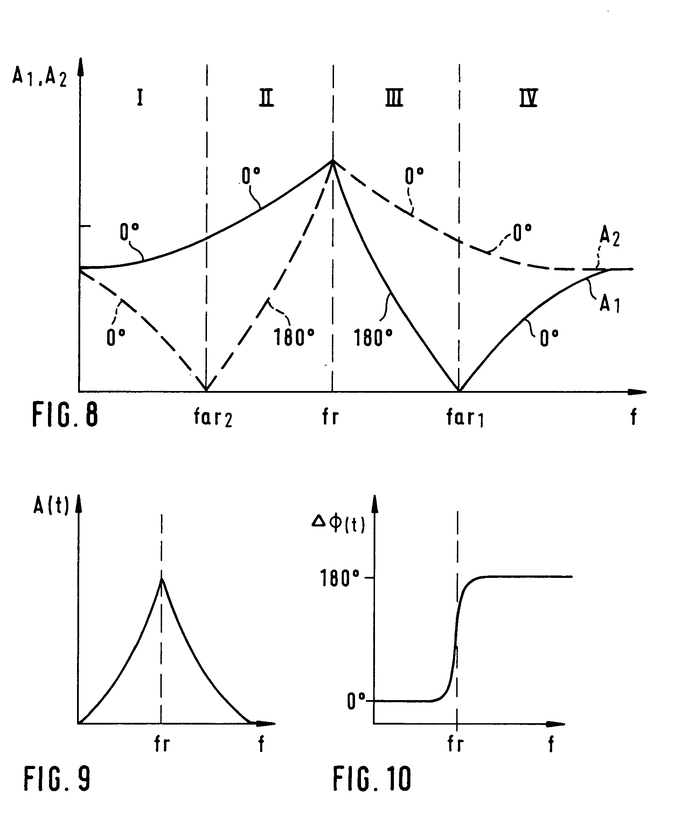

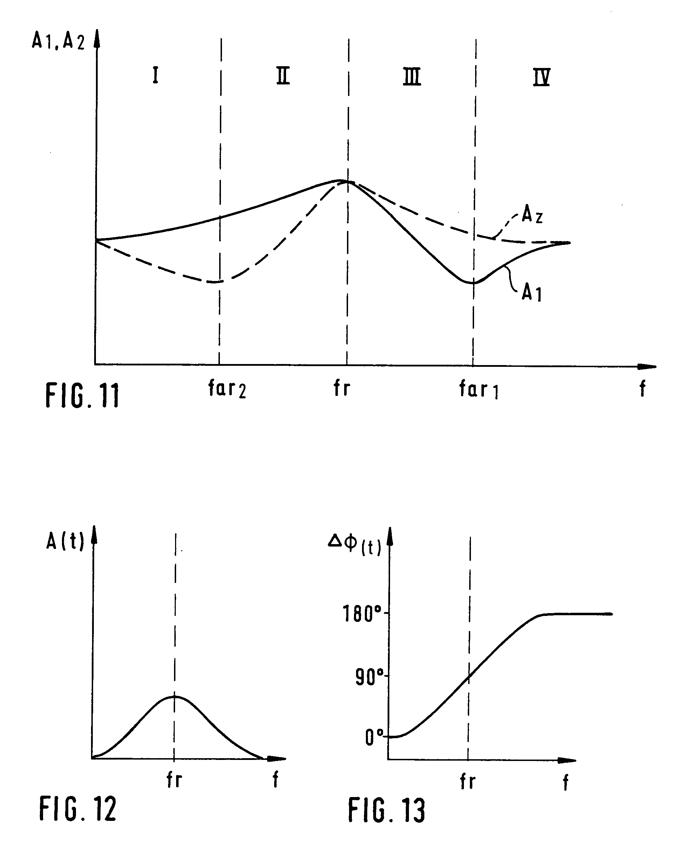

Das Ausgangssignal des Operationsverstärkers 6, also das Empfangssignal E, ist die amplituden- und phasengetreuen Differenz der beiden elektrischen Signale $E_1$ und $E_2$. Zum besseren Verständnis sind in Fig. 11 die Amplituden $A_1$ (f) als durchgezogenen Linie und $A_2$ (f) als gestrichelte Linie eingezeichnet. Fig. 12 zeigt die Amplitude A(f) und Fig. 13 die Phase $\Delta\phi$(f) des resultierenden Empfangssignals E. Die Werte der Phasen $\Delta\phi_1$ und $\Delta\phi_2$ der Signale $E_1$ und $E_2$ sind in Fig. 8 als Zahlenwert an den Linien angegeben.

Die nachfolgende Tabelle gibt eine stark vereinfachte Übersicht über die Amplituden $A_1$ und $A_2$ der elektrischen Signale $E_1$ und $E_2$ in den einzelnen Bereichen wieder. Darin sind die Amplituden als positive Beträge zu verstehen. Die Phasenbeziehungen sind durch die Vorzeichen vereinfacht erfaßt.

|   | $A_1$ | $A_2$ |
|---|---|---|
| I | $A_{mech1} + A_{M1} + A_{el1}$ | $A_{el2} - A_{M2} - A_{mech2}$ |
| II | $A_{M1} + A_{mech1} + A_{el1}$ | $A_{M2} - A_{el2} + A_{mech2}$ |
| III | $A_{M1} - A_{mech1}\, A_{el1}$ | $A_{M2} + A_{el2} - A_{mech2}$ |
| IV | $A_{mech1} - A_{M1} + A_{el1}$ | $A_{el2} + A_{M2} - A_{mech2}$ |

In den Bereichen I und II weist das erste Signal $E_1$ die größere Amplitude $A_1$ auf und ist daher dominant. In den Bereichen III und IV weist das zweite Signal $E_2$ die größere Amplitude $A_2$ auf und ist entsprechend dort dominant.

Die Amplitude A des Empfangssignals E weist ein einziges Maximum bei der Resonanzfrequenz $f_r$ des Systems auf und die Phase $\Delta\phi$ erfährt genau bei dieser Resonanzfrequenz $f_r$ einen Phasensprung um 180°. Dieser Verlauf entspricht dem eines idealen harmonischen Oszillators.

Reduziert sich Schwingungsgüte des Systems, so verändert sich die Amplitude A dahingehend, daß das Maximum weniger ausgeprägt ist. Es erfolgt anstelle des Phasensprungs ein kontinuierlicher Anstieg der Phase. Die Steigung ist um so geringer, je größer die Reduktion der Schwingungsgüte ist. Bei der Resonanzfrequenz $f_r$ liegt jedoch unabhängig von der Schwingungsgüte immer eine Phase von 90° vor.

In Fig. 11 sind die Amplituden $A_1$ (f) als durchgezogenen Linie und $A_2$ (f) als gestrichelte Linie von einer Anordnung mit geringer Schwingungsgüte eingezeichnet. Fig. 12 zeigt die Amplitude A(f) und Fig. 13 die Phase $\Delta\phi$(f) des resultierenden Signals E der Anordnung mit niedriger Schwingungsgüte.

Das am Ausgang des Operationsverstärker 6 anstehende Empfangssignal E steht für eine Auswertung und/oder eine weitere Verarbeitung zur Verfügung. Amplitude A(f) und Phase $\Delta\phi$ (f) des Empfangssignal weisen über die Frequenz den gleichen Verlauf auf wie das eigentliche Meßsignal.

Bei dem Ausführungsbeispiel von Fig. 2 weist die Polarisation des ersten Empfänger 24a in membranabgewandter Richtung. Die auf der membran-zugewandten Fläche des ersten Empfängers 24a angeordnete zweite Elektrode ist mit der Signalleitung 241a verbunden, die auf der membran-abgewandten Fläche des ersten Empfängers 24a angeordnete erste Elektrode ist über die Leitung 4 mit dem Bezugspotential verbunden.

Äquivalent hierzu ist eine Anordnung, bei der die Polarisation des ersten Empfängers 24a in membranzugewandter Richtung weist und die membran-abgewandte Elektrode mit der Signalleitung 241a verbunden ist.

Die Polarisation des zweiten Empfängers 24b weist bei dem gezeigten Ausführungsbeispiel ebenfalls in membranabgewandter Richtung. Die auf der membran-abgewandten Fläche des zweiten Empfängers 24b angeordnete erste Elektrode ist mit der zweiten Signalleitung 241b und die auf der membran-zugewandten Fläche angeordnete zweite Elektrode ist über die Leitung 4 mit dem Bezugspotential verbunden.

Äquivalent hierzu ist eine Anordnung, bei der die Polarisation des zweiten Empfängers 24b in membranzugewandter Richtung weist und die membran-zugewandte erste Elektrode mit der Signalleitung verbunden ist.

Für jeden der Empfänger 24a, 24b bestehen zwei äquivalente Anschlußmöglichkeiten. Entsprechend gibt es insgesamt vier äquivalente Anordnungen. Die in den Figuren 3a bis 13 dargestellten Phasen und Amplituden zeigen bei allen vier Äquivalenten einen im wesentlichen den gleichen Verlauf.

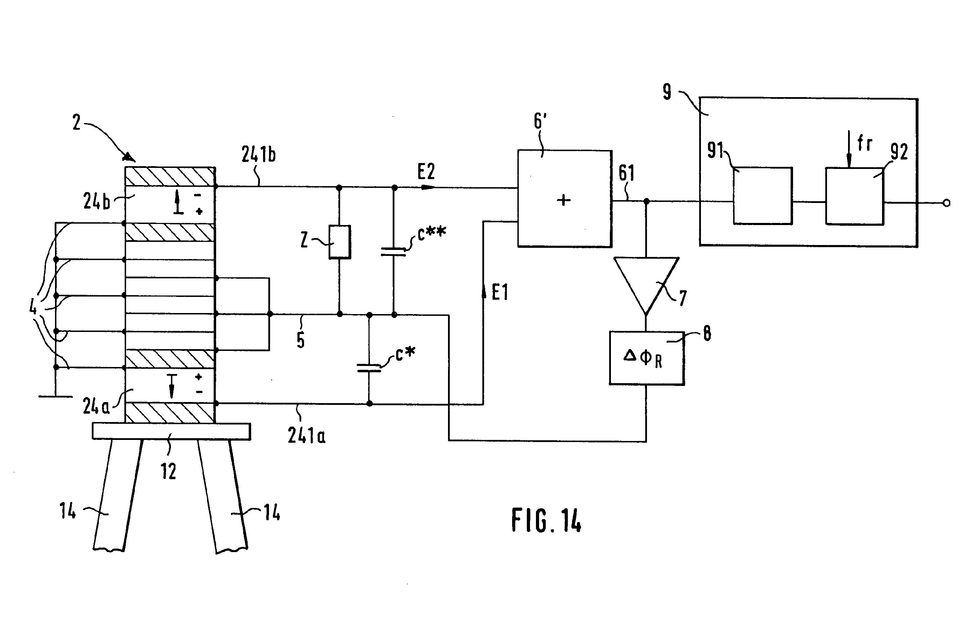

Neben dieser ersten Variante besteht eine zweite Variante der Erfindung. Ein Ausführungsbeispiel der zweiten Variante ist in Fig. 14 dargestellt. Die zweite Variante ist in sehr weiten Bereichen identisch zu der ersten Variante. Es werden daher nachfolgend lediglich die Unterschiede beschrieben. Ein Unterschied besteht darin, daß das elektrische Signal $E_1$ des ersten Empfängers 24a über eine erste Signalleitung 241a' abgegriffen wird, die mit der ersten Elektrode des ersten Empfängers 24a verbunden ist. Das elektrische Signal $E_2$ des zweiten Empfängers 24b wird genau wie bei der ersten Variante über eine zweite Signalleitung 241b abgegriffen wird, die mit der ersten Elektrode des zweiten Empfängers 24b verbunden ist, und die zweite Signalleitung 241b ist über eine elektrische Impedanz Z mit der Sendesignalleitung 5 verbunden.

Aus den beiden elektrischen Signalen $E_1$, $E_2$ wird ein Empfangssignal E erzeugt, das gleich der Summe der beiden elektrischen Signale $E_1$, $E_2$ ist. Entsprechend ist anstelle des Differenzverstärkers 6 von Fig. 2 ein Addierer 6' eingesetzt.

Die Signalleitung 241a' des ersten Empfängers 24a ist also mit derjenigen Elektrode verbunden, die auf einer den ersten Empfänger 24a in Richtung von dessen Polarisation begrenzenden Fläche angeordnet ist. Es ist die zweite Signalleitung 241b des zweiten Empfängers 24b genau wie bei der ersten Variante mit der Elektrode verbunden, die auf einer den Empfänger 24b in Richtung von dessen Polarisation begrenzenden Fläche angeordnet ist.

Genau wie bei der ersten Variante bestehen auch zu dem Ausführungsbeispiel der zweiten Variante von Fig. 14 vier äquivalente Ausführungsformen, die sich jeweils durch gleichzeitiges Umkehren der Polarisation und Vertauschen der Signalleitungsanschlüsse eines der Empfänger ergeben.

Bei einer gemäß der zweiten Variante ausgebildeten Anordnung bestehen gegenüber der ersten Variante Unterschiede im Zusammenhang mit den von dem ersten Empfänger 24a stammenden Signalen. So beträgt die Phase des Meßsignals des ersten Empfängers 24a unterhalb der Resonanzfrequenz 180° und oberhalb 0°. Die Phase des ersten zusätzlichen Signals des ersten Empfängers beträgt 180°. Bei einer Anordnung mit hoher Schwingungsgüte ergibt sich für das erste elektrische Signal des ersten Empfängers in den Bereichen I, II und IV eine Phase von 180° und im Bereich III eine Phase von 0°. Das Empfangssignal, das gleich der Summe der beiden elektrischen Signale der Empfänger ist weist unterhalb der Resonanzfrequenz eine Phase von 180° und oberhalb der Resonanzfrequenz eine Phase von 0° auf.

Von den insgesamt acht genannten Anordnungen bieten die zuerst beschriebenen vier Anorndungen gemäß der ersten Variante, bei denen das Empfangssignal gleich der Differenz der beiden elektrischen Signale der Empfänger ist, den Vorteil, daß Störsignale, z.B. Untergrundrauschen, bei der Differenzbildung reduziert werden. Demgegenüber können sich derartige Störsignale bei einer Summenbildung aufaddieren.

Wie in den Figuren 2 und 14 dargestellt ist resultierende Empfangssignal E, das am Ausgang des Operationsverstärkers 6 bzw. des Addierers 6' zur Verfügung steht, einem Regelkreis zugeführt, der eine feste Phasenbeziehung $\Delta\phi_R$ zwischen dem Sendesignal und dem Empfangssignal E, in dem dargestellten Ausführungsbeispiel eine Differenz von 90°, herstellt.

Das Empfangssignal E ist über die Empfangssignalleitung 61, über einen Verstärker 7 und einen Phasenschieber 8, der dessen Phase um den bestimmten konstanten Wert $\Delta\phi_R$ verschiebt, auf das Sendesignal zurückgekoppelt. Der Verstärker 7 ist so zu dimensionieren, daß die Selbsterregungsbedingung erfüllt ist. Das mechanische Schwingungsgebilde wird folglich über den Wandler 2 zu Schwingungen mit dessen Resonanzfrequenz $f_r$ angeregt. Ist das Schwingungsgebilde von dem Füllgut bedeckt, so hat die Resonanzfrequenz $f_r$ einen geringeren Werte, als wenn das Schwingungsgebilde frei schwingt. Der fest Wert der Phasendifferenz $\Delta\phi_R$ ist unabhängig davon, ob das Schwingungsgebilde von dem Füllgut bedeckt ist oder nicht.

Das Empfangssignal E liegt weiterhin über die Signalleitung 61 am Eingang einer Auswerteeinheit 9 an. Mittels einer Frequenzmeßschaltung 91 wird dessen Frequenz bestimmt und das Ergebnis einem Komparator 92 zugeführt. Dieser vergleicht die gemessene Frequenz mit einer in einem Speicher abgelegten Referenzfrequenz $f_R$. Ist die gemessene Frequenz kleiner als die Referenzfrequenz $f_R$ gibt die Auswerteeinheit 9 ein Ausgangssignal ab, das angibt, daß das mechanische Schwingungsgebilde von einem Füllgut bedeckt ist. Weist die Frequenz einen Wert auf der größer als die Referenzfrequenz $f_R$ ist, so gibt die Auswerteeinheit 9 ein Ausgangssignal ab, das angibt, daß das mechanische Schwingungsgebilde nicht vom Füllgut bedeckt ist.

Das Ausgangssignal ist z.B. eine Spannung, die einen entsprechenden Wert annimmt oder ein Strom, der einen entsprechenden Wert aufweist oder dem ein Signalstrom in Form von Pulsen mit einer entsprechenden Frequenz oder einer entsprechenden Dauer überlagert ist.

**Patentansprüche**

1. Anordnung zur Feststellung und/oder Überwachung eines vorbestimmten Füllstandes in einem Behälter, welche Anordnung umfaßt:

    - ein auf der Höhe des vorbestimmten Füllstandes angebrachtes mechanisches Schwingungsgebilde (1),
    - in einem Stapel angeordnete piezoelektrische Elemente,

    -- von denen mindestens eines ein Sender (23) ist, an den im Betrieb über eine Sendesignalleitung (5) ein elektrisches Sendesignal angelegt ist und der das Schwingungsgebilde (1) zu mechanische Schwingungen anregt,
    -- von denen eines ein erster Empfänger (24a) und eines ein zweiter Empfänger (24b) ist,

    --- wobei der erste und der zweite Empfänger (24a, 24b) die mechanischen Schwingungen des Schwingungsgebildes aufnehmen und in elektrische Signale ($E_1$, $E_2$) umwandeln,
    --- wobei der erste und der zweite Empfänger (24a, 24b) jeweils zwei Elektroden aufweisen, von denen eine erste Elektrode auf einer Fläche angeordnet ist, die den Empfänger (24a, 24b) in Richtung von dessen Polarisation begrenzt und von denen eine zweite Elektrode auf einer Fläche angeordnet ist, die den Empfänger (24a, 24b) in einer zu dessen Polarisation entgegengesetzten Richtung begrenzt,
    --- wobei das elektrische Signal ($E_1$) des ersten Empfängers (24a) über eine erste Signalleitung (241a) abgegriffen wird, die mit der zweiten Elektrode oder mit der ersten Elektrode des ersten Empfängers (24a) verbunden ist, und
    --- wobei das elektrische Signal ($E_3$) des zweiten Empfängers (24b) über eine zweite Signalleitung (241b) abgegriffen wird, die mit der ersten Elektrode des zweiten Empfängers (24b) verbunden ist,

    - eine elektrische Impedanz (Z) über die die zweite Signalleitung (241b) mit der Sendesignalleitung (5) verbunden ist,
    - eine Schaltung, die aus den beiden elektrischen Signalen ($E_1$, $E_2$) ein Empfangssignal (E) erzeugt, das in dem Fall, dass die erste Signalleitung (241a) mit der zweiten Elektrode des ersten Empfängers (24a) verbunden ist, gleich der Differenz der beiden elektrischen Signale ($E_1$, $E_2$) ist und das in dem Fall, dass die erste Signalleitung (241a) mit der ersten Elektrode des ersten Empfängers (24a) verbunden ist, gleich der Summe der beiden elektrischen Signale ($E_1$, $E_2$) ist, und
    - eine Auswerteeinheit (9), welche die Frequenz des Empfangssignals (E) bestimmt und mit einer Referenzfrequenz ($f_R$) vergleicht.

2. Anordnung nach Anspruch 1, bei der die Auswerteeinheit, die Frequenz des Empfangssignal (E) bestimmt, diese mit einer Referenzfrequenz ($f_R$) vergleicht und ein Ausgangssignal erzeugt das angibt, daß das mechanische Schwingungsgebilde (1) von einem Füllgut bedeckt ist, wenn die Frequenz einen Wert aufweist der kleiner als die Referenzfrequenz ist, und daß es nicht bedeckt ist, wenn der Wert größer ist.

3. Anordnung nach Anspruch 1, die einen Regelkreis aufweist, der eine zwischen dem elektrischen Sendesignal und dem elektrischen Empfangssignal (E) bestehende Phasendifferenz auf einen bestimmten konstanten Wert ($\Delta\phi_R$) regelt, bei dem das Schwingungsgebilde Schwingungen mit einer Resonanzfrequenz ($f_r$) ausführt.

4. Anordnung nach Anspruch 1, bei der die Impedanz (Z) eine Kapazität ist.

5. Anordnung nach Anspruch 1, bei der die Impedanz (Z) ein Widerstand, eine Induktivität oder eine Kombination aus mindestens einem Widerstand und/oder mindestens einer Induktivität und/oder mindestens einer Kapazität ist.

6. Anordnung nach Anspruch 1, bei der in dem Fall, dass die erste Signalleitung (241a) mit der zweiten Elektrode des ersten Empfängers (24a) verbunden ist, die erste Elektrode des ersten Empfängers (24a) und die zweite Elektrode des zweiten Empfängers (24b) jeweils über eine Leitung (4) mit einem Bezugspotential, insb. dem Erdpotential, verbunden sind.

7. Anordnung nach Anspruch 1, bei der in dem Fall, dass die erste Signalleitung (241a) mit der ersten Elektrode des ersten Empfängers (24a) verbunden ist,die zweite Elektrode des ersten Empfängers (24a) und die zweite Elektrode des zweiten Empfängers (24b) jeweils über eine Leitung (4) mit einem Bezugspotential, insb. dem Erdpotential, verbunden sind.

8. Anordnung nach Anspruch 1, bei der das erste und das zweite elektrische Signal ($E_1$, $E_2$) jeweils drei Komponenten enthalten, nämlich

   - ein Meßsignal ($E_{M1}$, $E_{M2}$), das durch die Schwingung des mechanischen Schwingungsgebildes bedingt ist,
   - ein erstes zusätzliches Signal ($E_{el1}$, $E_{el2}$), das durch eine mechanische Kopplung zwischen dem Sender (23) und dem Empfänger (24) bedingt ist, und
   - ein zweites zusätzliches Signal ($E_{mech1}$, $E_{mech2}$, das durch eine elektrische Kopplung zwischen dem Sender (23) und dem Empfänger (24) bedingt ist, und
   - bei der die Impedanz (Z) so bestimmt ist, daß das die Amplitude ($A_{e12}$) des zweiten zusätzlichen Signals ($E_{e12}$) des zweiten Empfängers (24b) größer als die Amplitude ($A_{mech1}$) des ersten zusätzlichen Signals ($E_{mech1}$) des ersten Empfängers (24a) ist.

9. Anordnung nach Anspruch 8, bei der eine amplituden-und phasengetreue Summe des ersten und des zweiten zusätzlichen Signals ($E_{mech1} + E_{cl1}$) des ersten Empfängers (24a) eine Amplitude ($A_{\Sigma1}$) aufweist, die gleich einer Amplitude ($A_{\Sigma2}$) der amplituden- und phasengetreuen Summe des ersten und des zweiten zusätzlichen Signals ($E_{moch3} + E_{el2}$) des zweiten Empfängers (24b) ist.

10. Anordnung nach Anspruch 1, bei der eine Antiresonanzfrequenz ($f_{el1}$) des ersten Empfängers (24a) größer als eine Resonanzfrequenz ($f_r$) des mechanischen Schwingungsgebildes (1) ist und bei der eine Antiresonanzfrequenz ($f_{or2}$) des zweiten Empfängers (24b) kleiner als die Resonanzfrequenz ($f$) des mechanischen Schwingungsgebildes (1) ist.

**Claims**

1. Arrangement for determining and/or monitoring a prespecified level in a container where the arrangement comprises:

   - a mechanical vibration element (1) fixed at the height of the prespecified level,
   - piezoelectric elements arranged in a stack,

     -- of which at least one is a transmitter (23) to which an electrical transmission signal is applied in operation via a transmission signal cable (5) and which causes the vibration element (1) to vibrate mechanically
     -- of which one is a first receiver (24a) and one is a second receiver (24b),

       --- where the first and second receiver (24a, 24b) receive the mechanical vibrations of the vibration element and convert them to electrical signals ($E_1$, $E_2$),
       --- where the first and second receiver (24a, 24b) each exhibit two electrodes, of which a first electrode is arranged on an area which limits the receiver (24a, 24b) in the direction of its polarization, and of which a second electrode is arranged on an area which limits the receiver (24a, 24b) in a direction contrary to its polarization,

--- where the electrical signal ($E_1$) of the first receiver (24a) is measured via an initial signal cable (241 a) which is connected to the second electrode or to the first electrode of the first receiver (24a) and

--- where the electrical signal ($E_2$) of the second receiver (24b) is measured via a second signal cable (241 b) which is connected to the first electrode of the second receiver (24b)

- an electrical impedance (Z) via which the second signal cable (241 b) is connected to the transmission signal cable (5),

- a circuit that generates a receiver signal (E) from the two electrical signals ($E_1$ and $E_2$) which, when the first signal cable (241 a) is connected to the second electrode of the first receiver (24a), is equal to the difference of the two electrical signals ($E_1$, $E_2$) and, when the first signal cable (241 a) is connected to the first electrode of the first receiver (24a), is equal to the sum of the two electrical signals ($E_1$, $E_2$) and

- an evaluation unit (9) which determines the frequency of the receiver signal (E) and compares this to a reference frequency ($f_R$).

2. Arrangement as per Claim 1 where the evaluation unit determines the frequency of the receiver signal (E), compares this to a reference frequency ($f_R$) and generates an output signal that indicates that the mechanical vibration element (1) is covered by a medium if the frequency exhibits a value that is smaller than the reference frequency, and that the mechanical vibration element is not covered if the value is bigger.

3. Arrangement as per Claim 1 which exhibits a control circuit that controls a phase difference, which exists between the electrical transmission signal and the electrical receiver signal (E), to a certain constant value ($\Delta\phi_R$) at which the vibration element vibrates at a resonant frequency ($f_r$).

4. Arrangement as per Claim 1 where the impedance (Z) is a capacitance.

5. Arrangement as per Claim 1 where the impedance (Z) is a resistance, an inductance or a combination of at least a resistance and/or at least an inductance and/or at least a capacitance.

6. Arrangement as per Claim 1, where the first electrode of the first receiver (24a) and the second electrode of the second receiver (24b) are each connected via a cable (4) to a reference potential - particularly the ground potential - in situations where the first signal cable (241 a) is connected to the second electrode of the first receiver (24a).

7. Arrangement as per Claim 1, where the second electrode of the first receiver (24a) and the second electrode of the second receiver (24b) are each connected via a cable (4) to a reference potential - particularly the ground potential - in situations where the first signal cable (241 a) is connected to the first electrode of the first receiver (24a).

8. Arrangement as per Claim 1 where the first and second electrical signal ($E_1$, $E_2$) each contain three components namely

- a measuring signal ($E_{M1}$, $E_{M2}$) that depends on the vibration of the mechanical vibration element
- a first additional signal ($E_{e11}$, $E_{e12}$) that depends on a mechanical coupling between the transmitter (23) and the receiver (24) and
- a second additional signal ($E_{mech1}$, $E_{mech2}$) that depends on an electrical coupling between the transmitter (23) and the receiver (24) and
- where the impedance (Z) is determined in such a way that the amplitude ($A_{e12}$) of the second additional signal ($E_{e12}$) of the second receiver (24b) is bigger than the amplitude ($A_{mech1}$) of the first additional signal ($E_{mech1}$) of the first receiver (24a).

9. Arrangement as per Claim 8 where a sum of the first and second additional signals ($E_{mech1} + E_{e11}$) - which is in line with the amplitude and phase - of the first receiver (24a) exhibits an amplitude ($A_{\Sigma1}$) which is equal to an amplitude ($A_{\Sigma2}$) of the sum - which is in line with the amplitude and phase - of the first and second additional signal ($E_{mech2} + E_{e12}$) of the second receiver (24b).

10. Arrangement as per Claim 1 where an anti-resonance frequency ($f_{ar1}$) of the first receiver (24a) is bigger than a resonance frequency ($f_r$) of the mechanical vibration element (1) and where an anti-resonance frequency ($f_{ar2}$) of the second receiver (24b) is smaller than the resonance frequency (f) of the mechanical vibrating element (1).

**Revendications**

1. Dispositif destiné à la détermination et/ou la surveillance d'un niveau prédéfini au sein d'un réservoir, lequel dispositif comprend :

   - un système vibrant mécanique (1) disposé à la hauteur du niveau prédéfini,
   - des éléments piézoélectriques disposés sous forme d'une pile,

   -- parmi lesquels au moins l'un d'entre eux est un émetteur (23), auquel est appliqué, en fonctionnement, un signal d'émission électrique par l'intermédiaire d'un câble de signal d'émission (5), et qui excite le système vibrant (1) en vibrations mécaniques,
   -- parmi lesquels l'un d'entre eux est un premier récepteur (24a) et l'un d'entre eux un deuxième récepteur (24b),

   --- le premier et le deuxième récepteurs (24a, 24b) enregistrant les vibrations mécaniques du système vibrant et les convertissant en des signaux électriques ($E_1$, $E_2$),
   --- le premier et le deuxième récepteurs (24a, 24b) comportant chacun deux électrodes, parmi lesquelles une première électrode est disposée sur une surface, qui délimite le récepteur (24a, 24b) dans le sens de sa polarisation, et parmi lesquelles une deuxième électrode est disposée sur une surface, qui délimite le récepteur (24a, 24b) dans le sens inverse de sa polarisation,
   --- le signal électrique ($E_1$) du premier récepteur (24a) étant prélevé par l'intermédiaire d'un premier câble de signal (241 a), qui est relié avec la deuxième électrode du premier récepteur (24a), et
   --- le signal électrique ($E_2$) du deuxième récepteur (24b) étant prélevé par l'intermédiaire d'un deuxième câble de signal (241 b), qui est relié avec la première électrode du deuxième récepteur (24b),

   - une impédance électrique (Z), par le biais de laquelle le deuxième câble de signal (241 b) est relié avec le câble de signal d'émission (5),
   - un circuit, qui génère à partir des deux signaux électriques ($E_1$, $E_2$) un signal de réception (E) qui, dans le cas où le premier câble de signal (241 a) est relié avec la deuxième électrode du premier récepteur (24a), est égal à la différence des deux signaux électriques ($E_1$, $E_2$) et qui, dans le cas où le premier câble de signal (241 a) est relié avec la première électrode du premier récepteur (24a), est égal à la somme des deux signaux électriques ($E_1$, $E_2$) et
   - une unité d'exploitation (9), qui détermine la fréquence du signal de réception (E) et la compare à une fréquence de référence ($f_R$).

2. Dispositif selon la revendication 1, pour lequel l'unité d'exploitation détermine la fréquence du signal de réception (E), la compare à une fréquence de référence ($f_R$) et génère un signal de sortie, qui indique que le système vibrant mécanique (1) est recouvert d'un produit lorsque la fréquence présente une valeur inférieure à la fréquence de référence, et qu'il n'est pas recouvert lorsque la valeur est supérieure.

3. Dispositif selon la revendication 1, lequel présente un circuit de régulation régulant à une valeur constante ($\Delta\Phi_R$) déterminée une différence de phase existante entre le signal d'émission électrique et le signal de réception (E) électrique, constante à laquelle le système vibrant produit des vibrations à une fréquence de résonance ($f_r$).

4. Dispositif selon la revendication 1, pour lequel l'impédance (Z) est une capacité.

5. Dispositif selon la revendication 1, pour lequel l'impédance (Z) est une résistance, une inductance ou une combinaison d'au moins une résistance et/ou d'au moins une inductance et/ou d'au moins une capacité.

6. Dispositif selon la revendication 1, pour lequel dans le cas où le premier câble de signal (241 a) est relié avec la deuxième électrode du premier récepteur (24a), la première électrode du premier récepteur (24a) et la deuxième électrode du deuxième récepteur (24b) sont respectivement reliés par le biais d'un câble (4) à un potentiel de référence, notamment le potentiel de terre.

7. Dispositif selon la revendication 1, pour lequel dans le cas où le premier câble de signal (241 a) est relié avec la première électrode du premier récepteur (24a), la deuxième électrode du premier récepteur (24a) et la deuxième électrode du deuxième récepteur (24b) sont respectivement reliés par le biais d'un câble (4) à un potentiel de référence, notamment le potentiel de terre.

**8.** Dispositif selon la revendication 1, pour lequel le premier et le deuxième signal électrique ($E_1$, $E_2$) contiennent chacun trois composantes, notamment

- un signal de mesure ($E_{M1}$, $E_{M2}$), qui est conditionné par la vibration du système vibrant mécanique,
- un premier signal supplémentaire ($E_{el1}$, $E_{el2}$), qui est conditionné par un couplage mécanique entre l'émetteur (23) et le récepteur (24), et
- un deuxième signal supplémentaire ($E_{mech1}$, $E_{mech2}$), qui est conditionné par un couplage électrique entre l'émetteur (23) et le récepteur (24), et
- pour lequel l'impédance (Z) est définie de telle sorte que l'amplitude ($A_{el2}$) du deuxième signal supplémentaire ($E_{el2}$) du deuxième récepteur (24b) soit supérieure à l'amplitude ($A_{mech1}$) du premier signal supplémentaire ($E_{mech1}$) du premier récepteur (24a).

**9.** Dispositif selon la revendication 8, pour lequel une somme à amplitude et à phase égales du premier et du deuxième signal supplémentaire ($E_{mech1} + E_{el1}$) du premier récepteur (24a) présente une amplitude ($A_{\Sigma1}$), qui est égale à une amplitude ($A_{\Sigma2}$) de la somme à amplitude et à phase égales du premier et du deuxième signal supplémentaire ($E_{mech2} + E_{el2}$) du deuxième récepteur (24b).

**10.** Dispositif selon la revendication 1, pour lequel une fréquence d'antirésonance ($f_{ar1}$) du premier récepteur (24a) est supérieure à la fréquence de résonance ($f_r$) du système vibrant mécanique (1) et pour lequel une fréquence d'antirésonance ($f_{ar2}$) du deuxième récepteur (24b) est inférieure à la fréquence de résonance ($f_r$) du système vibrant mécanique (1).

FIG.1

FIG. 2

FIG.3a FIG.3b FIG.3c FIG.4a FIG.4b FIG.4c FIG.5a FIG.5b FIG.5c

FIG. 6a

FIG. 6b

FIG. 7a

FIG. 7b

FIG. 8

FIG. 9

FIG. 10

FIG. 11

FIG. 12

FIG. 13

FIG.14

EP 0 875 741 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4419617 A
- DE 3931453 C1
- DE 4419617